# DEMANDE DE BREVET EUROPEEN

(11) **EP 1 208 901 A1**
(43) Date de publication de la demande: **29.05.2002**
(21) Numéro de dépôt: 01402996.1
(22) Date de dépôt: 22.11.2001
(51) Int. Cl.: B01D 45/12, B04C 5/28

(54) **Dispositif de filtration inertielle**

(30) Priorité: 24.11.2000 FR 0015192
(71) Demandeur: Sofrance, 87800 Nexon (FR)
(72) Inventeur: Mantel, Thierry, 87170 Isle (FR); Dehaine, bastien, 87000 Limoges (FR)
(74) Mandataire: Le Forestier, Eric

(57) **Abrégé**

L'invention concerne un dispositif (20) de filtration inertielle d'un écoulement d'un fluide chargé en particules, le dispositif comprenant une pluralité de cellules de filtration (C), ainsi que des éléments de structure (25, 22) permettant de délimiter à l'intérieur du dispositif un espace de balayage (23) pour recueillir des cellules une partie de l'écoulement chargé en particules, les cellules étant disposées de manière à ménager à l'intérieur de l'espace de balayage des zones de drainage (26), caractérisé en ce que lesdits éléments de structure sont conformés de manière à augmenter la hauteur de l'espace de balayage au niveau d'au moins certaines zones de drainage.

## Description

La présente invention concerne les dispositifs de filtration de fluides.

Plus précisément, l'invention concerne un dispositif de filtration inertielle d'un fluide chargé en particules.

De tels dispositifs de filtration inertielle comportent généralement une pluralité de cellules, chaque cellule étant destinée à soustraire, à un écoulement principal du fluide à filtrer, des impuretés telles que des particules liquides et/ou solides.

Des applications de ces dispositifs de filtration inertielle sont, à titre d'exemple et de manière non limitative, les filtres à air utilisés au niveau des entrées d'air des turbines d'hélicoptères, des systèmes de ventilation des baies avioniques d'hélicoptères, des entrées d'air moteur de locomotives, des systèmes de ventilation des transformateurs électriques des locomotives.

On va brièvement ci-dessous décrire les caractéristiques générales d'un dispositif de filtration inertielle.

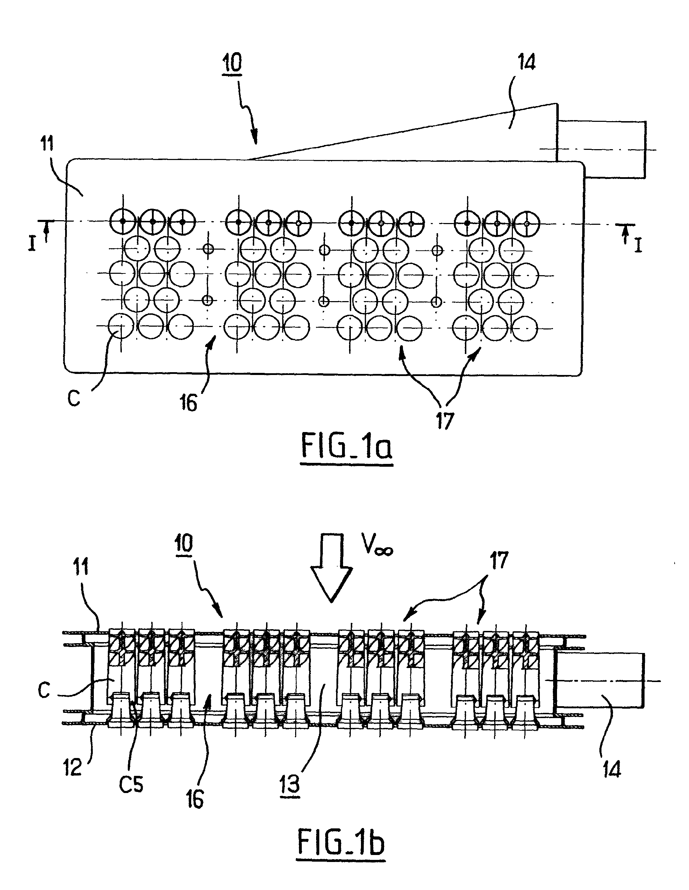

Les figures 1a et 1b représentent une configuration connue d'un tel dispositif, la figure 1a étant une vue de dessus sur laquelle est défini le plan de coupe I-I, plan de coupe qui est celui de la figure 1b.

Sur ces figures, le dispositif de filtration inertielle 10 comporte une pluralité de cellules de filtration C, disposées côte à côte et assemblées par l'intermédiaire d'une plaque supérieure 11 et d'une plaque inférieure 12.

La plaque 11 est exposée à l'écoulement incident d'un fluide arrivant avec la vitesse incidente V_{∞}, cet écoulement étant un écoulement de fluide pouvant comporter des impuretés que l'on désire filtrer.

La plaque 11 est ainsi définie comme une plaque amont, la plaque 12 correspondant à une plaque aval de sortie du dispositif 10.

Les deux plaques 11 et 12 sont pleines, à l'exception des évidements ménagés pour recevoir les cellules C qui reçoivent la totalité de l'écoulement de fluide traversant le dispositif 10, et permettent le filtrage des impuretés comme on va l'expliquer ci-dessous.

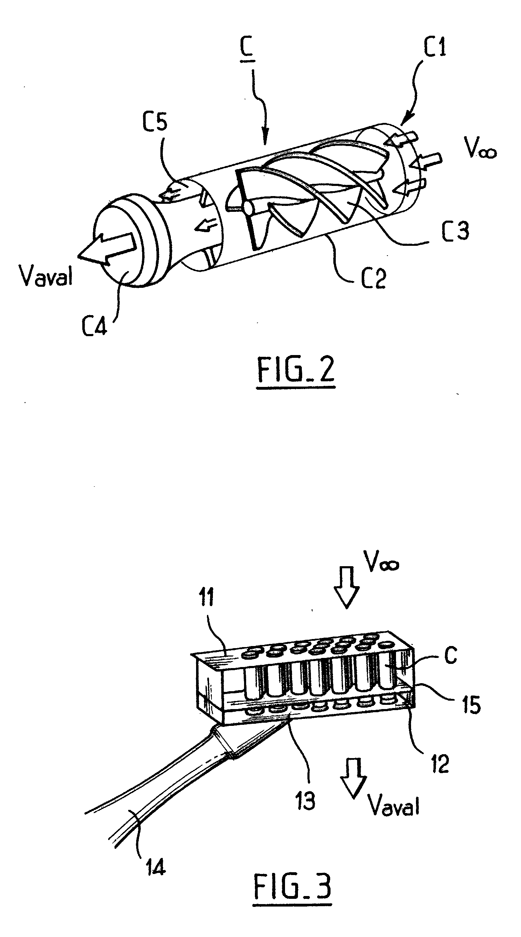

En référence maintenant à la figure 2, on a représenté schématiquement une cellule C recevant un écoulement incident de fluide qui pénètre avec la vitesse V_{∞} dans sa section d'entrée C1. La cellule comporte un conduit cylindrique C2, à l'intérieur duquel est disposé coaxialement un élément spiralé C3 apte à mettre l'écoulement de fluide en rotation et à générer ainsi dans le conduit C2 un tourbillon.

Du fait de leurs dimensions et de leur poids, les impuretés liquides et/ou solides véhiculées par le fluide se trouvent déportées loin de l'axe de la cellule vers la périphérie du conduit C2 après avoir franchi la zone de mise en rotation, de sorte que la partie centrale de l'écoulement proche de l'axe longitudinal de la cellule est débarrassée de la plus grande partie des impuretés initialement présentes dans le fluide ayant pénétré dans la cellule.

Cette partie centrale purifiée de l'écoulement quitte la cellule par sa section de sortie C4 avec une vitesse Vₐᵥₐₗ, alors que la partie périphérique de l'écoulement, chargée en impuretés, est évacuée par des ouvertures périphériques C5 ménagées dans la partie aval de la cellule.

Afin de séparer efficacement la partie périphérique de l'écoulement de sa partie centrale, on dispose en aval de l'élément spiralé C3 un cône divergent de sortie présentant une section d'entrée réduite, et dont la section de sortie correspond à la section de sortie C4.

En référence de nouveau à la figure 1b, les cellules disposées côte à côte permettent ainsi de filtrer un écoulement de fluide, en séparant de l'écoulement principal un écoulement chargé en impuretés, qui quitte chaque cellule par les ouvertures avales C5 des cellules.

Les écoulements chargés en impuretés issus des différentes cellules du dispositif sont rassemblés dans l'espace intérieur 13 du dispositif, nommé « espace de balayage », qui est délimité par les deux plaques 11 et 12 et les cellules C, puis évacués par un éjecteur 14.

Pour améliorer l'évacuation de la partie de l'écoulement chargée en impuretés qui est rassemblée dans l'espace de balayage, on peut associer à l'éjecteur des moyens de ventilation, ou encore une alimentation annexe en air comprimé.

Un dispositif de filtration tel que décrit ci-dessus permet ainsi de soustraire d'un écoulement principal une partie des impuretés véhiculées par cet écoulement.

Les performances d'un tel dispositif sont généralement représentées par un paramètre d'efficacité, qui correspond au pourcentage de particules filtrées.

Un autre paramètre caractéristique du fonctionnement de ces dispositifs est la perte de charge correspondant à la variation de pression entre l'amont et l'aval du dispositif 10. Cette perte de charge est en fait représentative de la quantité d'énergie que l'on doit fournir à l'éjecteur pour assurer une bonne évacuation des particules et un bon fonctionnement du dispositif ; on recherche ainsi à réaliser des dispositifs de filtration inertielle dont la perte de charge associée est la plus faible possible.

Afin d'améliorer les performances d'un tel dispositif, il est également connu d'intégrer à l'intérieur du dispositif une troisième plaque intermédiaire, telle que celle désignée par la référence 15 sur la figure 3.

On précise que par souci de simplification et de cohérence, les éléments similaires ou identiques se retrouvant dans les différents dispositifs décrits dans ce texte sont désignés par la même référence. Ainsi on retrouve sur cette figure 3 une plaque amont 11, une plaque aval 12 ainsi qu'un éjecteur 14.

Sur cette figure, la plaque intermédiaire 15 s'étend parallèlement aux plaques 11 et 12 entre lesquelles elle est intercalée. La plaque intermédiaire 15 est comme les plaques 11 et 12 pleine, à l'exception des évidements ménagés pour laisser passer les cellules C qui traversent cette plaque intermédiaire.

Les bords de cette plaque 15 sont fixés de manière étanche aux parois latérales du dispositif, de manière à constituer entre la plaque intermédiaire 15 et la plaque aval 12 un espace de balayage 13 étanche.

La plaque 15 réduit sensiblement le volume de l'espace de balayage 13, ce qui permet de limiter la dissipation d'énergie associée aux trajets internes des impuretés à l'intérieur de cet espace.

La configuration de la figure 3 permet ainsi de limiter la perte de charge, et donc l'apport d'énergie nécessaire à une bonne évacuation du fluide chargé en impuretés.

On précise que la plaque intermédiaire 15, qui sépare de manière étanche un volume utile en aval de cette plaque (espace de balayage 13), et un volume non utile situé entre cette plaque et la plaque amont 11, peut être remplacée par un élément de structure plein, le volume non utile étant dans ce cas rempli.

Dans tous les cas, selon l'état de la technique connue cet élément de structure intermédiaire 15 délimite l'espace de balayage par une paroi plane, et la plaque aval 12 est également plane, de sorte que la hauteur de l'espace de balayage est constante.

Par ailleurs, une autre caractéristique importante de ces dispositifs est la concentration en cellules C par unité de surface. En effet, chaque cellule étant apte à filtrer un débit donné de fluide, il est intéressant de rassembler dans un même dispositif autant de cellules que possible.

On peut ainsi rechercher à augmenter le débit de fluide pouvant être traité par un dispositif de dimensions données, ou à rendre aussi compact que possible un dispositif dont le nombre de cellules est fixé.

Mais un dispositif dont la surface entière serait couverte par des cellules trop rapprochées ne permettrait pas une bonne évacuation des particules à l'intérieur de l'espace de balayage.

Une solution permettant d'intégrer un grand nombre de cellules par unité de surface tout en autorisant une bonne évacuation des particules consiste à définir dans le dispositif des zones à l'intérieur desquelles les cellules sont fortement concentrées, ces zones étant séparées par des espaces libres qui jouent le rôle de couloirs de drainage de l'écoulement.

A cet égard, on remarquera sur les figures 1a et 1b que les cellules C sont réparties dans le dispositif 10 de manière à ménager des zones de drainage 16 libres entre des zones 17 de fortes concentrations de cellules.

Ces zones de drainage 16 qui ont ici la forme de canaux rectilignes permettent de drainer le fluide chargé en impuretés vers l'éjecteur, de manière à améliorer son évacuation.

On constate donc qu'il est nécessaire de trouver un compromis entre la concentration globale de cellules par unité de surface dans le dispositif, et la préservation de zones de drainage qui permettent d'assurer une bonne évacuation des particules par l'éjecteur.

Le but de l'invention est de perfectionner l'état de la technique évoqué ci-dessus, en particulier en améliorant les conditions du compromis évoqués ci-dessus.

Afin d'atteindre ce but, l'invention propose un dispositif de filtration inertielle d'un écoulement d'un fluide chargé en particules, le dispositif comprenant une pluralité de cellules de filtration, ainsi que des éléments de structure qui permettent de délimiter à l'intérieur du dispositif un espace de balayage pour recueillir des cellules une partie de l'écoulement chargé en particules, les cellules étant disposées de manière à ménager à l'intérieur de l'espace de balayage des zones de drainage, caractérisé en ce que lesdits éléments de structure sont conformés de manière à augmenter la hauteur de l'espace de balayage au niveau d'au moins certaines zones de drainage.

D'autres aspects du dispositif selon l'invention sont les suivants
- la différence de hauteur de balayage au niveau des zones de drainage est obtenue par l'adaptation de la géométrie d'un élément de structure intermédiaire, intercalé entre un élément amont et un élément aval de manière à définir un espace de balayage,
- l'élément de structure intermédiaire présente une paroi comprenant des concavités en regard de zones de drainage,
- la paroi de l'élément de structure intermédiaire présente une concavité en regard de chaque zone de drainage,
- les concavités ont une forme dont les génératrices, parallèles entre elles, sont également sensiblement parallèles auxdits éléments amont et aval,
- les concavités ont une forme circulaire,
- les concavités ont une forme en « toits »,
- l'élément de structure intermédiaire est une plaque d'épaisseur finie,
- l'élément de structure intermédiaire est un élément volumique,
- la géométrie d'un élément de fermeture aval du dispositif est adaptée pour augmenter la hauteur de l'espace de balayage au niveau d'au moins certaines zones de drainage,
- le fluide est de l'air chargé en particules liquides et/ou solides.

D'autres aspects, buts et avantages de l'invention apparaîtront mieux à la lecture de la description suivante de formes préférées de réalisation de l'invention, faite en référence aux dessins annexés sur lesquels, outre les figures 1a, 1b, 2 et 3 déjà commentées ci-dessus :
- les figures 4a et 4b sont respectivement une vue de dessus d'un dispositif de filtration inertielle selon l'invention sur lequel est défini le plan de coupe IV-IV, et une vue en coupe selon ce plan,
- la figure 5a est une représentation schématique d'une plaque intermédiaire destinée à être intégrée dans un dispositif de filtration selon l'invention, correspondant au mode de réalisation de la figure 4b,
- la figure 5b est une représentation filaire par dessin automatique d'un élément volumique reproduisant sensiblement la géométrie de la plaque de la figure 5a,
- les figures 6a et 6b sont des vues analogues à celles des figures 5a et 5b, représentant une géométrie d'élément intermédiaire selon une variante de l'invention.

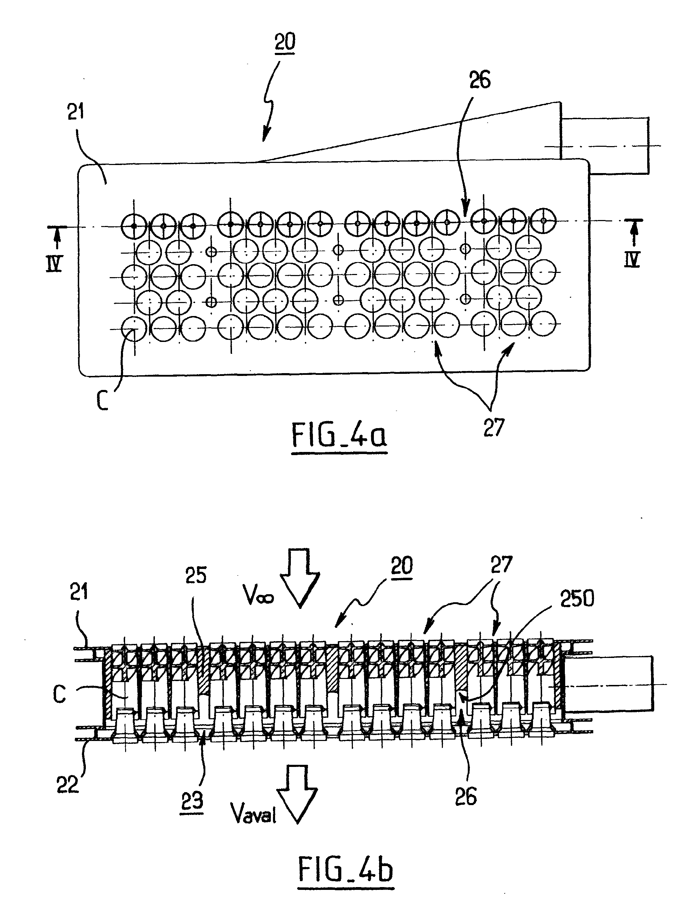

En référence maintenant à la figure 4a, on a représenté en vue de dessus un dispositif de filtration 20 selon une première forme de réalisation de l'invention.

On remarque sur cette figure, et sur la coupe correspondante de la figure 4b, que le dispositif comprend ici encore des cellules C, qui sont assemblées en zones de forte concentration 27 séparées par des canaux de drainage 26.

On remarquera sur cette figure que les canaux de drainage 26 ont une largeur inférieure à la largeur des canaux de drainage 16 du dispositif des figures 1a et 1b de l'état de la technique, dont les dimensions générales sont par ailleurs les mêmes. Cet aspect sera détaillé plus loin dans le présent texte.

La figure 4b détaille la structure interne du dispositif de filtration selon l'invention.

Sur cette figure, on retrouve une plaque amont 21 et une plaque aval 22. On retrouve également un élément de structure intermédiaire 25 dont les bords sont fixés de manière étanche à l'intérieur du dispositif, de manière à limiter, du côté amont selon la direction générale de l'écoulement, le volume de l'espace de balayage 23 de ce dispositif.

Dans le mode de réalisation représenté sur cette figure, cet élément de structure intermédiaire 25 est réalisé sous la forme d'un élément plein (représenté en traits hachurés) ; toutefois comme dans le cas des éléments de structure de l'état de la technique, il peut être remplacé par un élément en plaque d'épaisseur finie délimitant de la même manière étanche la limite amont de l'espace de balayage 23.

Dans le cas de l'invention, on constate que la paroi de l'élément de structure 25 qui délimite de la sorte l'espace de balayage n'est pas comme dans le cas de la technique connue défini par une paroi plane.

Dans le cas de l'invention, au contraire, cet élément de structure intermédiaire délimite l'espace de balayage de sorte que la distance entre la paroi de l'élément de structure intermédiaire et la paroi de la plaque de sortie aval 22 soit réduite en regard des zones 27 de fortes concentrations de cellules, et sensiblement augmentée en regard des zones de drainage 26 qui séparent ces zones de fortes concentrations de cellules.

En d'autres termes, la hauteur de l'espace de balayage est augmentée au niveau des zones de drainage.

Et on précise qu'il est également possible selon l'invention de ne prévoir une telle disposition qu'en regard de certaines zones de drainage.

Cette disposition est particulièrement avantageuse, car elle permet à la fois :
- de réduire le volume global de l'espace de balayage, de sorte que la perte de charge globale du dispositif soit aussi réduite que possible,
- de maintenir un volume suffisant au niveau des zones de drainage 26, de sorte que la circulation de fluide chargé en impuretés peut s'effectuer le plus librement possible dans ces zones pour parvenir à l'éjecteur.

En outre, du fait de cet aménagement particulier des parois de l'espace de balayage, il est possible de rassembler sur un même dispositif de filtration inertielle un plus grand nombre de cellules par unité de surface, comme cela apparaît clairement sur les figures 4a et 4b.

Dans ce cas en effet, il est possible de réduire les dimensions des zones de drainage 26, c'est-à-dire dans le cas présent de réduire la largeur des couloirs de drainage, la hauteur utile de ces zones de drainage étant augmentée de sorte qu'on obtient un drainage au moins équivalent.

Le tableau ci-dessous représente des résultats d'efficacité et de perte de charge pour des dispositifs de filtration, selon l'état de la technique (deux premières lignes), et selon l'invention (deux dernières lignes).

| Polluant | Efficacité % | Δp (mbar) | Densité surfacique (cellules/m²) |
|---|---|---|---|
| Iso Coarse A4 | E A4 | Δp A4 | D1 |
| Iso Medium A3 | E A3 | Δp A3 | D1 |
| Iso Coarse A4 | E A4 + 0.4 | Δp A4 - 0.1 | D1 + 15 % |
| Iso Medium A3 | E A3 + 0.9 | Δp A3 - 0.1 | D1 + 15 % |

Les deux premières lignes de ce tableau correspondent ainsi à un dispositif classique comprenant 52 cellules, la première ligne correspondant à la filtration d'air chargé en particules de granulométrie iso coarse A4 élevée, alors que la deuxième ligne correspond à la filtration d'air chargé en particules de granulométrie iso médium A3 moyenne.

Un tel dispositif de l'état de la technique présente ainsi une densité surfacique moyenne de référence dont la valeur est notée D1, comme cela est indiqué dans la dernière colonne du tableau.

L'efficacité est exprimée en pourcentage de particules filtrées, la perte de charge étant exprimée sous forme d'un différentiel de pression en millibars.

Pour ce dispositif de l'état de la technique, l'efficacité a une valeur notée E A4 avec l'air chargé en particules de granulométrie iso coarse A4, et une valeur notée E A3 avec l'air chargé en particules de granulométrie iso medium A3.

Et ce même dispositif est associé à une perte de charge dont la valeur est notée Δp A4 avec l'air chargé en particules de granulométrie iso coarse A4, et une valeur notée Δp A3 avec l'air chargé en particules de granulométrie iso medium A3.

Les valeurs E A3, E A4, Δp A3 et Δp A4 constituent ainsi des valeurs de référence associées à un dispositif conçu selon l'état de la technique.

Les deux dernières lignes de ce tableau correspondent à un dispositif qui comprend un élément intermédiaire de structure de géométrie adaptée selon l'invention, comme décrit ci-dessus.

On constate que pour chaque type de particules véhiculées par l'écoulement, l'efficacité augmente.

On constate également que non seulement cette augmentation de l'efficacité ne se fait pas au détriment de la perte de charge, mais encore que dans le même temps la perte de charge diminue, ce qui constitue un avantage supplémentaire.

Et on remarquera enfin que le dispositif selon l'invention testé ici comprenant 62 cellules sur une surface équivalente à celle du dispositif classique, la densité surfacique est accrue de 15%, ce qui permet d'augmenter soit le nombre de cellules et donc le débit global filtré, soit la compacité du dispositif à nombre égal de cellules.

Il apparaît ainsi que le dispositif selon l'invention permet d'améliorer sensiblement les performances de filtration.

Et d'autres essais effectués par la Demanderesse ont également montré que la configuration selon l'invention dans laquelle la hauteur de l'espace de balayage est augmentée au niveau des zones de drainage, est avantageuse par rapport à une configuration comportant un élément de structure intermédiaire plan correspondant à la représentation de la figure 3.

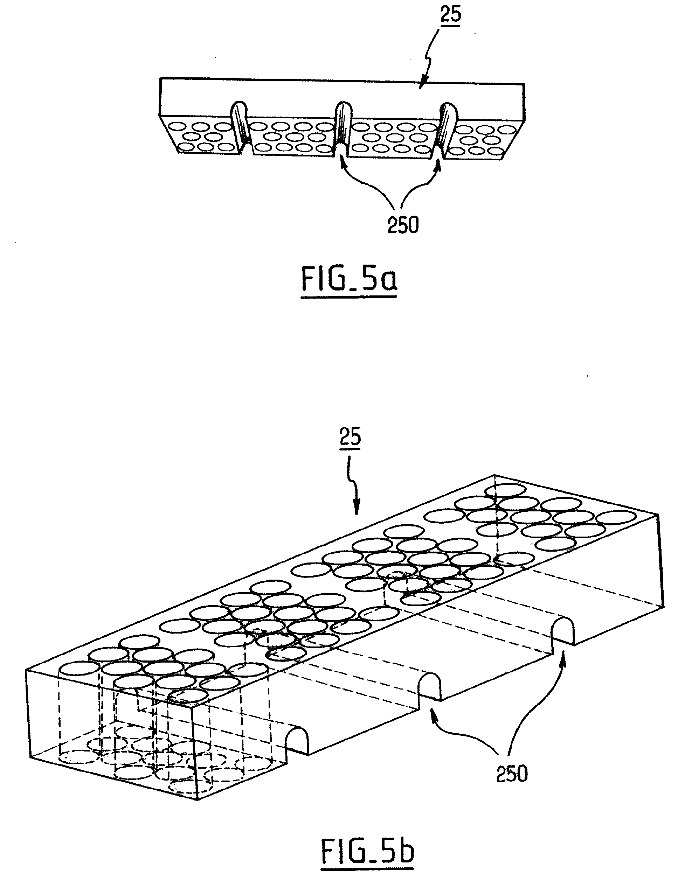

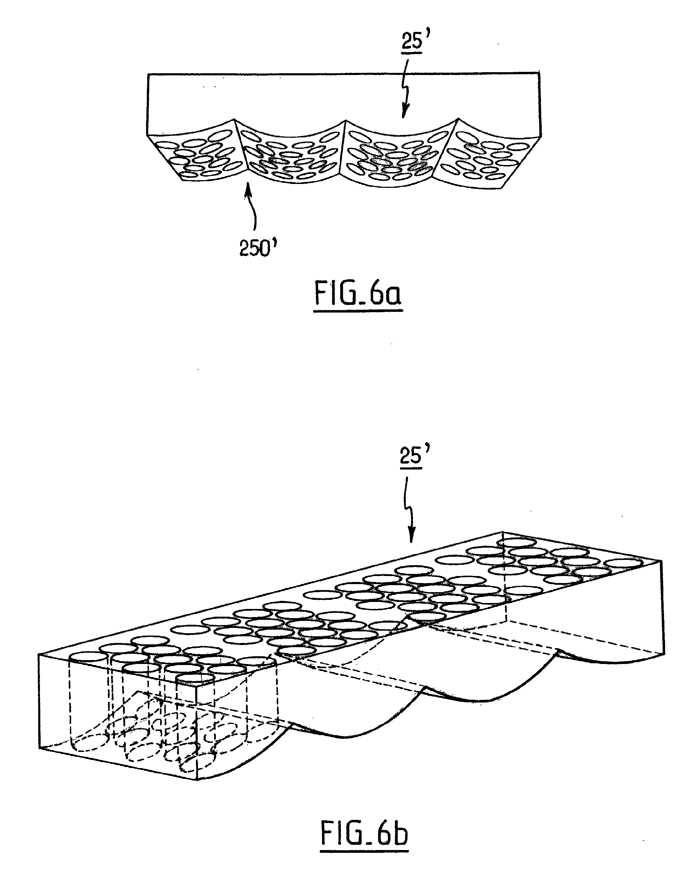

Plus précisément, la Demanderesse a mené des essais comparatifs sur des dispositifs dont l'élément de structure intermédiaire était respectivement :
- un élément plan comme cela est connu dans l'état de la technique (voir figure 3),
- un élément dont le profil correspond à celui représenté sur la figure 4b. La géométrie de cet élément 25 est également représentée sur les figures 5a et 5b,
- et un élément de structure intermédiaire dont la géométrie est également adaptée, qui correspond à une variante de réalisation de l'invention. La géométrie de cet élément qui est référencé 25' est représentée sur les figures 6a et 6b.

Des résultats tant numériques qu'expérimentaux ont montré une augmentation de l'efficacité avec les éléments 25 et 25', par rapport à un élément intermédiaire plan classique.

Plus précisément, avec un écoulement d'air chargé en particules de granulométrie iso médium A3, les meilleurs résultats ont été obtenus avec l'élément 25.

Avec un écoulement d'air chargé en particules de granulométrie iso coarse A4, les meilleurs résultats ont été obtenus avec l'élément 25'.

Ainsi, un dispositif de filtration inertielle comportant un élément de paroi intermédiaire de géométrie adaptée de sorte que la hauteur de l'espace de balayage soit augmentée au niveau de zones de drainage, permet d'augmenter l'efficacité du dispositif.

Et comme cela a été mentionné plus haut, cette disposition permet également de réduire la largeur de ces zones de drainage, de sorte que la densité surfacique des cellules peut être augmentée d'environ 15%.

Il est également à noter que ces gains ne se font pas au détriment de la perte de charge du dispositif : en effet, lors de ces essais également on a constaté que non seulement la perte de charge n'augmentait pas, mais qu'elle diminuait sensiblement.

Et les différents essais menés ont également mis en évidence une meilleure éjection des particules à filtrer par le dispositif, les dépôts de particules à l'intérieur de l'espace de balayage étant très sensiblement réduits (réduction d'un facteur de l'ordre de 50%).

Revenant sur la géométrie particulière des éléments de structure intermédiaire mis en oeuvre dans le dispositif selon l'invention, on remarquera en outre la forme particulière de l'élément de structure intermédiaire 25 au niveau des couloirs de drainage.

Dans le mode de réalisation représenté sur la figure 4b, l'élément de structure intermédiaire 25 présente ainsi une concavité circulaire 250 en regard de chaque couloir de drainage. Cette configuration correspond à la représentation des figures 5a et 5b.

Il est également possible selon l'invention de conférer à l'élément de structure intermédiaire toute géométrie qui permettrait d'augmenter la hauteur de l'espace de balayage au niveau des zones de drainage, ou de certaines zones de drainage.

Dans la configuration représentée sur les figures 6a et 6b, l'élément de structure intermédiaire 25' a une forme en « toits », chaque ligne de sommet de toit 250' devant se trouver en regard d'un canal de drainage.

Ainsi, l'élément de structure intermédiaire 25' comprend ici encore des concavités en regard des canaux de drainage. Dans le mode de réalisation de cette variante, les concavités ont une géométrie particulière en forme de toits.

Et plus généralement, ces concavités peuvent avoir toute forme obtenue à partir de lignes génératrices parallèles entre elles, qui s'étendent en outre dans un plan parallèle aux plans des plaques 21 et 22 de fermeture.

Comme on l'a dit, l'élément de structure intermédiaire peut être un élément volumique, le volume interne du dispositif qui sépare les cellules et qui est situé en amont de l'espace de balayage étant non utile.

Il est également possible pour des raisons d'économie de matière et de poids, de réaliser cet élément de structure intermédiaire sous la forme d'une simple plaque ayant la géométrie désirée, assemblée à l'intérieur du dispositif de sorte que ses bords soient fixés de manière étanche aux parois latérales internes du dispositif.

On précise que l'adaptation de la hauteur de l'espace de balayage au niveau d'au moins certaines zones de drainage peut être obtenue non seulement par l'adaptation de la géométrie de la plaque intermédiaire, mais également éventuellement par l'adaptation de la géométrie de la plaque aval.

Et il est bien sûr possible de jouer à la fois sur la géométrie de l'élément intermédiaire, et de la plaque aval de fermeture du dispositif.

Bien entendu, l'invention n'est pas limitée aux modes de réalisation décrits ci-dessus.

En particulier, l'invention couvre tout dispositif de filtration inertielle comprenant un élément de structure intermédiaire, et/ou un élément de fermeture aval, dont la géométrie est adaptée pour conférer à l'espace de balayage une hauteur augmentée au niveau d'au moins certaines zones de drainage.

On précise également que l' « élément intermédiaire » selon l'invention peut évidemment être réalisé en une seule pièce avec la plaque amont de fermeture du dispositif et/ou avec la plaque avale, et/ou avec les parois latérales du dispositif.

Il est enfin possible de mettre en oeuvre des aménagements de l'espace de balayage selon l'invention (augmentation de la hauteur de cet espace au niveau d'au moins certaines zones de drainage), dans un dispositif de filtration ne comportant pas d'élément de structure intermédiaire.

Dans ce cas, l'adaptation de la hauteur de l'espace de balayage est obtenue par la géométrie de la paroi interne de la plaque amont, et/ou de la plaque aval.

Et l'invention peut être appliquée à tout domaine mettant en oeuvre la filtration de fluide, liquide ou gazeux, et n'est nullement limitée aux applications évoquées en introduction de la présente demande.

## Revendications

1. Dispositif (20) de filtration inertielle d'un écoulement d'un fluide chargé en particules, le dispositif comprenant une pluralité de cellules de filtration (C), ainsi que des éléments de structure (25, 25', 22) permettant de délimiter à l'intérieur du dispositif un espace de balayage (23) pour recueillir des cellules une partie de l'écoulement chargé en particules, les cellules étant disposées de manière à ménager à l'intérieur de l'espace de balayage des zones de drainage (26), **caractérisé en ce que** lesdits éléments de structure sont conformés de manière à augmenter la hauteur de l'espace de balayage au niveau d'au moins certaines zones de drainage.

2. Dispositif selon la revendication précédente, **caractérisé en ce que** la différence de hauteur de balayage au niveau des zones de drainage est obtenue par l'adaptation de la géométrie d'un élément de structure intermédiaire (25, 25'), intercalé entre un élément amont (21) et un élément aval (22) de manière à définir un espace de balayage (23).

3. Dispositif selon la revendication précédente, **caractérisé en ce que** l'élément de structure intermédiaire (25, 25') présente une paroi comprenant des concavités (250, 250') en regard de zones de drainage.

4. Dispositif selon la revendication précédente, **caractérisé en ce que** la paroi de l'élément de structure intermédiaire présente une concavité en regard de chaque zone de drainage.

5. Dispositif selon la revendication 3 ou 4, **caractérisé en ce que** les concavités (250, 250') ont une forme dont les génératrices, parallèles entre elles, sont également sensiblement parallèles auxdits éléments amont (21) et aval (22).

6. Dispositif selon la revendication 5, **caractérisé en ce que** les concavités (250) ont une forme circulaire.

7. Dispositif selon la revendication 5, **caractérisé en ce que** les concavités (250') ont une forme en « toits ».

8. Dispositif selon l'une des revendications 2 à 7, **caractérisé en ce que** l'élément de structure intermédiaire (25, 25') est une plaque d'épaisseur finie.

9. Dispositif selon l'une des revendications 2 à 7, **caractérisé en ce que** l'élément de structure intermédiaire (25, 25') est un élément volumique.

10. Dispositif selon l'une des revendications précédentes, **caractérisé en ce que** la géométrie d'un élément de fermeture aval (22) du dispositif est adaptée pour augmenter la hauteur de l'espace de balayage au niveau d'au moins certaines zones de drainage.

11. Dispositif selon l'une des revendications précédentes, **caractérisé en ce que** le fluide est de l'air chargé en particules liquides et/ou solides.
